# EUROPÄISCHE PATENTSCHRIFT

(11) **EP 0 968 454 B1**
(45) Veröffentlichungstag und Bekanntmachung des Hinweises auf die Patenterteilung: **19.06.2002**
(21) Anmeldenummer: 98919122.6
(22) Anmeldetag: 20.03.1998
(51) Int. Cl.: G02B 26/08, G02B 5/06

(54) **OPTISCHER MEHRFACHSCHALTER**
OPTICAL MULTIPLE CIRCUIT BREAKER
DISJONCTEUR OPTIQUE A COUPURE MULTIPLE

(30) Priorität: 20.03.1997 DE 19711559
(43) Veröffentlichungstag der Anmeldung: 05.01.2000
(73) Patentinhaber: INSTITUT FÜR MIKROTECHNIK MAINZ GmbH, 55129 Mainz-Hechtsheim (DE)
(72) Erfinder: PICARD, Antoni, D-65347 Eltville (DE); SCHULZE, Jens, D-55116 Mainz (DE); NEUMEIER, Michel, D-55270 Schwabenheim (DE)
(74) Vertreter: Fuchs Mehler Weiss & Fritzsche
(86) Internationale Anmeldenummer: EP9801643
(87) Internationale Veröffentlichungsnummer: WO9843125

(56) Entgegenhaltungen:
- FR-A- 2 602 595
- US-A- 4 245 886
- PATENT ABSTRACTS OF JAPAN vol. 016, no. 427 (P-1416), 8. September 1992 & JP 04 146402 A (HITACHI), 20. Mai 1992

## Beschreibung

Die Erfindung betrifft einen optischen Mehrfachschalter gemäß des Oberbegriffs des Anspruchs 1.

Im Bereich der optischen Nachrichtentechnik gewinnen optische Schalter zum wahlweise Verknüpfen von optischen Nachrichtenkanälen sowohl untereinander als auch mit lokalen Netzen und Endnutzern eine zunehmende Bedeutung. Insbesondere besteht ein Bedarf an optischen Mehrfachschaltern kompakter und einfacher Bauweise, die eine Einkoppelung von optischen Komponenten oder Lichtwellenleitern in vorhandene Lichterwellenleiteranordnungen ermöglichen.

Es sind mechanische Matrixschalter bekannt, bei denen Spiegel oder Prismen mit hoher Präzision bewegt werden. Auf Spiegel- oder Prismenanordnungen beruhende Schalter benötigen einen sehr stabilen und präzisen Aufbau. Die geforderte Präzision ist im allgemeinen mit einem hohen technischen Aufwand verbunden.

Neben den optischen Schaltelementen, bei denen die mikrooptischen Komponenten mit hoher Präzision bewegt werden, sind auch optische Schaltelemente bekannt, die nach einem Schaltprinzip arbeiten, das eine Bewegung von mikrooptischen Komponenten nicht erforderlich macht.

Die GB 1 494 150 beschreibt ein optisches Schaltelement in einem Lichtwellenleiter, bei dem eine Grenzfläche, auf die das einfallende Licht trifft, zwischen einem Zustand der Totalreflexion und der Transmission umgeschaltet wird. Der bekannte optische Schalter weist in dem Kern des Lichtwellenleiters einen schmalen Spalt auf. Der Spalt bildet eine ebene Grenzfläche zwischen einem optisch dichteren Medium, d.h. dem Material des Kerns des Lichtwellenleiters, und einem optisch dünneren Medium, d.h. einem gasförmigen Stoff in dem Spalt, so daß schräg auf die Grenzfläche fallendes, entlang des Lichtwellenleiters geführtes Licht an der Grenzfläche in Richtung eines angrenzenden Lichtwellenleiters totalreflektiert wird. Zum Umschalten in den transmittierenden Zustand, in dem das auf die Grenzfläche treffende Licht seine Ausbreitungsrichtung beibehält, wird in den Spalt eine Flüssigkeit geleitet, deren Brechungsindex dem Brechungsindex des Materials entspricht, aus dem der Kern des Lichtwellenleiters besteht. Als Vorrichtung zum wahlweisen Einleiten des Stoffs in seiner flüssigen oder gasförmigen Phase ist ein mit einer Heizeinrichtung an den Lichtwellenleiter angebrachtes Vorratsgefäß vorgesehen. Durch thermische Ausdehnung wird die Flüssigkeit in den durch die Mantelschicht in die Kernschicht des Lichtwellenleiters hineinragenden Schlitz gedrückt. In einer anderen Ausführungsform wird der im Schlitz befindliche flüssige Stoff durch Erhitzen in die Gasphase gebracht.

Nachteilig ist die aufwendige Herstellung des bekannten Schalters. Weiterhin besitzt der bekannte Schalter eine hohe optische Dämpfung, da der aus dem Lichtwellenleiter divergierend heraustretende Lichtstrahl im Bereich des Schlitzes nicht geführt ist. Daher kann im transmittierenden Schaltzustand ein Teil in den angrenzenden Lichtwellenleiter überkoppeln, was zu einem hohen Nebensprechen führt. Eine Realisierung eines optischen Mehrfachschalters mit mehreren Eingängen und Ausgängen bedarf entsprechend viele dieser bekannten Schaltelemente und wäre daher sehr aufwendig zu realisieren.

Aus der IEEE Transactions on Components, Packaging, and Manufacturing Technology - Part B, Vol. 18, No. 2, May 1995, Seiten 241 - 244 ist ein optischer Mehrfachschalter gemäß dem Oberbegriff des Anspruchs 1 bekannt.

Ein entscheidender Nachteil dieses optischen Mehrfachschalters ist die Beschränkung auf einen Satz von N parallel zueinander ausgerichteter, in einer Ebene liegender optischer Eingänge. Eine Gestaltungsfreiheit bezüglich der Anordnung der optischen Ein- und Ausgänge ist auf Grund der Anordnung der die reflektierenden Flächen aufweisenden Ausnehmungen in einer Ebene sowie deren parallele Ausrichtung zueinander nicht gegeben. Damit ist mit diesem optischen Mehrfachschalter beispielsweise eine Verwendung zur Ankoppelung einer optischen Baugruppe oder eines lokalen Glasfasernetzes an bestehende optische Datenleitungen nicht ohne weiteres mögtich.

Weiterhin von Nachteil ist die große Anzahl der Schaltelemente. So weist der bekannte optische Mehrfachschalter bei N optischen Eingängen NxN einzelne Schaltelemente auf, die zum Umschalten zwischen dem reflektierenden und dem transmittierenden Schaltzustand einzeln von einem Roboter angesteuert werden müssen. Ein gleichzeitiges und damit schnelles Umschalten aller Schaltelemente ist damit nicht durchführbar.

Auf Grund der Vielzahl der in einer Ebene angeordneten Schaltelemente weist der bekannte optische Mehrfachschalter relativ lange optische Weglängen auf, so daß zur Vermeidung einer hohen optischen Dämpfung und von Nebensprechen eine Führung des Lichts mittels integrierten Wellenleitern vorgesehen ist.

Ausgehend von dem angeführten Stand der Technik ist es Aufgabe der Erfindung, einen optischen Mehrfachschalter bereitzustellen, mit dem optische Eingänge so auf optische Ausgänge geschaltet werden können, daß beispielsweise eine optische Baugruppe oder ein lokales Glasfasemetz an bestehende optische Datenleitungen problemlos angekoppelt werden kann, und der ein einfaches und damit schnelles Umschalten zwischen dem reflektierenden und dem transmittierenden Schaltzustand gestattet, sowie der eine kompakte Bauweise und damit kleine optische Weglängen aufweist.

Die Lösung der Aufgabe erfolgt erfindungsgemäß mit den in Patentanspruch 1 sowie mit den in Patentanspruch 3 angegebenen Merkmalen. Die abhängigen Ansprüche betreffen vorteilhafte Ausgestaltungen der Erfindung.

Der erfindungsgemäße optische Mehrfachschalter nach Anspruch 1 weist 2xN optische Eingänge E1(n) und E2(n) und 2xN optische Ausgänge A1(n) und A2(n) auf, wobei n ein Index von 2 bis N, mit N größer gleich 2, ist. Durch wahlweise Reflexion oder Transmission an zwei Flächen können damit 2xN Lichtstrahlen aus den 2xN optischen Eingängen auf die 2xN optische Ausgänge geschaltet werden. Zur Bildung dieser zwei Flächen weist der Grundkörper des optischen Mehrfachschalters maximal zwei Ausnehmungen auf. Im transmittierenden Schaltzustand sind die Ausnehmungen mit einem Stoff gefüllt, dessen Brechungsindex etwa dem des transparenten Materials des Grundkörpers entspricht. Dadurch wird die Transmission der aus den N ersten optischen Eingängen E1(n) einfallenden Lichtstrahlen auf die N zweiten optischen Ausgänge A2(n) ermöglicht. im reflektierenden Schaitzustand sind die Ausnehmungen mit einem optisch dünneren Stoff gefüllt. Zwei Flächen der Ausnehmungen sind so geformt und so im Strahlengang angeordnet, daß im reflektierenden Schaltzustand die erste Fläche die aus den N ersten optischen Eingängen E1(n) einfallenden N Lichtstrahlen im wesentlichen auf die N ersten optischen Ausgänge A1(n) reflektiert, während die zweite Fläche die aus den N zweiten optischen Eingängen E2(n) einfallenden N Lichtstrahlen im wesentlichen auf die N zweiten optischen Ausgänge A2(n) reflektiert. Im wesentlichen handelt es sich bei den Reflexionen um Totalreflexionen an der Grenzfläche eines optisch dichteren Mediums, d. h. dem Grundkörper, zu einem optisch dünneren Medium, d. h. dem optisch dünneren Stoff in der Ausnehmung. Mindestens eine Vorrichtung füllt die Ausnehmungen wahlweise mit dem optisch dichteren oder dem optisch dünneren Stoff.

Gemäß einer Ausführungsform sind die beiden an der wahlweisen Reflexion oder Transmission beteiligten Flächen parallel zueinander angeordnet, so daß die N zweiten optischen Eingänge E2(n) und die N ersten optischen Ausgänge A1(n) auf gegenüberliegenden Seiten des Grundkörpers liegen. Hierzu kann der Grundkörper zwei Ausnehmungen oder eine Ausnehmung, beispielsweise mit einem parallelogrammförmigen Querschnitt, aufweisen.

Der erfindungsgemäße optische Mehrfachschalter nach Anspruch 3 weist wie der optische Mehrfachschalter nach Anspruch 1 2xN optische Eingänge E1(n) und E2(n) und 2xN optische Ausgänge A1(n) und A2(n) auf, wobei n jedoch ein Index von 1 bis N, mit N größer gleich 1, ist. Durch wahlweise Reflexion oder Transmission an zwei Flächen, gebildet durch maximal zwei Ausnehmungen im Grundkörper, können auch hier 2xN Lichtstrahlen aus den 2xN optischen Eingängen auf die 2xN optische Ausgänge geschaltet werden. Im Vergleich mit dem optischen Mehrfachschalter nach Anspruch 1 weist der Grundkörper dieses Schalters zwei zusätzliche, so geformte und so im Strahlengang der Lichtstrahlen angeordnete Flächen auf, daß im transmittierenden Schaltzustand durch Reflexion an diesen zusätzlichen Flächen die N zweiten optischen Eingänge E2(n) mit den N ersten optischen Ausgängen A1(n) optisch verbunden sind. Wie im optischen Mehrfachschalter nach Anspruch 1 sind auch hier im transmittierenden Schaltzustand die N ersten optischen Eingänge E1(n) mit den N zweiten optischen Ausgängen A2(n) und im reflektierenden Schaltzustand die N ersten und die N zweiten optischen Eingänge E1(n) bzw. E2(n) mit den N ersten bzw. den N zweiten optischen Ausgängen A1(n) bzw. A2(n) optisch verbunden.

Bevorzugt liegt eine der beiden zusätzlichen Flächen des Grundkörpers des optischen Mehrfachschalters nach Anspruch 3 gegenüber den N ersten optischen Ausgängen A1(n) und die andere zusätzliche Fläche gegenüber den N zweiten optischen Eingängen E2(n).

Vorteilhaft sind die beiden zusätzlichen Flächen in einem Winkel von 70° bis 110° zueinander angeordnet. Im transmittierenden Schaltzustand werden die von den N zweiten optischen Eingängen E2(n) kommenden, durch die Ausnehmung transmittierten Lichtstrahlen durch Reflexion an diesen beiden zusätzlichen Flächen auf die N ersten optischen Ausgänge A1(n) umgelenkt.

Die beiden zusätzlichen Flächen können Außenflächen des Grundkörpers entsprechen oder durch eine oder mehrere zusätzliche Ausnehmungen im Grundkörper gebildet sein.

Vorzugsweise werden die auf diese zusätzlichen Flächen einfallenden Lichtstrahlen totalreflektiert. Hierzu bilden diese Flächen Grenzflächen zwischen einem optisch dichteren Medium, d. h. dem Material der transparenten Teile des Grundkörpers, und einem optisch dünneren Medium, d. h. der äußeren Umgebung des Grundkörpers bzw. einem optisch dünneren Stoff oder Stoffgemisch im Innern der zusätzlichen Ausnehmungen im Grundkörper.

Grundlegender Vorteil der erfindungsgemäßen optischen Mehrfachschalter ist, daß die beiden für den Schaltvorgang verantwortlichen Grenzflächen nicht bewegt werden, und damit keine präzisen Bewegungen ausgeführt werden müssen. Durch die vorzugsweise Verwendung von kollimierten Lichtstrahlen sind keine aufwendig zu realisierende Wellenleiterstrukturen zur Strahlführung im Grundkörper erforderlich. Da der Strahl auch in den am Schaltvorgang beteiligten Ausnehmungen nicht divergiert, weisen die erfindungsgemäßen optischen Mehrfachschalter eine geringe optische Dämpfung und geringes Nebensprechen auf. Auf Grund der vielfältigen Ausgestaltungsmöglichkeiten der Ausnehmungen, lassen sich optische Mehrfachschalter mit unterschiedlicher Lage der Ein- und Ausgänge und mit unterschiedlichen Schaltungsmöglichkeiten realisieren. Darüberhinaus sind unabhängig von der Anzahl der optischen Eingänge nur zwei optisch hochwertige Flächen erforderlich, die durch nur maximal zwei Ausnehmungen gebildet werden. Bei einem äußerst kompakten und einfachen Aufbau ist daher mit den erfindungsgemäßen optischen Mehrfachschaltern die Möglichkeit zur preisgünstigen Massenfertigung gegeben.

Die Verwendung der Begriffe optischer Eingang sowie optischer Ausgang im Gegensatz zu dem Begriff optischer Kanal dient nur einer Vereinfachung der Beschreibung des optischen Mehrfachschalters. Auf Grund der Umkehrbarkeit der Lichtwege ist eine Verwendung in beiden Strahlrichtungen, also bidirektional, möglich.

Vorzugsweise werden die erfindungsgemäßen optischen Mehrfachschalter mit Freistrahlen, d. h. mit nicht in Wellenleiterstrukturen geführten Lichtstrahlen, betrieben. Dies kann beispielsweise dadurch erreicht werden, daß das mittels Lichtwellenleiter herangeführte Licht vor dem Eintritt in den eigentlichen Schalter kollimiert oder fokussiert wird. Grundsätzlich ist es aber auch denkbar, in die optischen Mehrfachschalter integriert optische Strukturen zur Führung von Licht beispielsweise mittels Schicht- oder Grabenwellenleiterstrukturen aufzunehmen, wodurch aber ein komplexerer Aufbau des Grundkörpers erforderlich wird.

Die Lage der optischen Ein- und Ausgänge in den optischen Mehrfachschaltern ist nicht zwingend vorgegeben. Für N größer gleich 2 wird eine Anordnung bevorzugt, bei der die N ersten einfallenden Lichtstrahlen LS1(n) nicht mit den N zweiten einfallenden Lichtstrahlen LS2(n) in einer Ebene liegen. Hierbei wird jeweils eine in etwa parallele Anordnung der N ersten und eine in etwa parallele Anordnung der N zweiten optischen Eingänge bevorzugt. Die dadurch entstehenden Ebenen von einfallenden Lichtstrahlen und Ebenen von austretenden Lichtstrahlen können je nach Geometrie des verwendeten optischen Mehrfachschalters vielfältig zueinander angeordnet sein. Hierbei bevorzugt sind die optischen Eingänge E1(n) und E2(n) derart angeordnet, daß die Ebene der N ersten einfallenden Lichtstrahlen LS1(n) zu der Ebene der N zweiten einfallenden Lichtstrahlen LS2(n) in einem Winkel von 70° bis 110° liegt. Vorteilhaft sind hierzu die Ausnehmungen derart angeordnet, daß die Einfallswinkel der Lichtstrahlen auf eine Fläche einer Ausnehmung etwa 40° bis 50° betragen. Die Lage der Ausgänge zu den Eingängen ist dadurch vorgegeben, daß die aus den N ersten optischen Eingängen E1(n) transmittierte Lichtstrahlen auf die gleichen N zweiten optischen Ausgänge A2(n) fallen wie die in dem reflektierenden Schaltzustand aus den N zweiten optischen Eingängen E2(n) reflektierten Lichtstrahlen.

Hierdurch lassen sich vorteilhaft diese optischen Mehrfachschalter im Bereich der optischen Nachrichtentechnik, insbesondere zum wahlweise Verbinden oder Entkoppeln von optischen Nachrichtenkanälen sowie zum Einkoppeln von optischen Komponenten in bestehende optische Verbindungen, verwenden. Auf Grund der möglichen rechtwinkligen Anordnung der N zweiten optischen Eingänge E2(n) zu den N ersten optischen Eingängen E1(n) bei N gemeinsamen Ausgängen A2(n) oder auch 2N gemeinsamen Ausgängen A2(n) und A1(n), lassen sich mit den erfindungsgemäßen Mehrfachschaltern analog zu den in der Mikroelektronik bekannten Bussystemen mit rechtwinklig angeordneten Steckkarten und Platinen kompakte optische Bussysteme realisieren.

In einer ersten Ausführungsform der optischen Mehrfachschalter sind zwei Ausnehmungen im Grundkörper zur wahlweisen Reflexion oder Transmission von Licht vorgesehen. Die durch diese Ausnehmungen gebildeten, an der Reflexion beteiligten Flächen liegen in einer bevorzugten Anordnung zueinander in einem Winkel von etwa 70° bis 110°. Es sind jedoch auch andere Anordnungen dieser Flächen zueinander denkbar.

Auch bei der Geometrie des Querschnitts einer Ausnehmung in der Ebene des Strahlengangs eines Lichtstrahls sind viele Realisierungsmöglichkeiten je nach Art der gewünschten Strahlführung und der verwendeten Herstellungsverfahren gegeben. In den beiden einfachsten Fällen weist der Querschnitt im wesentlichen die Form eines Vierecks oder Dreiecks auf.

in einer zweiten bevorzugten Ausführungsform der optischen Mehrfachschalter ist nur eine Ausnehmung im Grundkörper enthalten, die die beiden Flächen bildet, an denen wahlweise Licht reflektiert oder transmittiert wird. Nach einer bevorzugten Ausführungsform liegen diese beiden Flächen in einem Winkel von etwa 70° bis 110° zueinander. Auch hier sind jedoch andere Anordnungen dieser Flächen zueinander denkbar. Beispiele für Querschnittsgeometrien der Ausnehmung sind ein dreieckförmiger und ein trapezförmiger Querschnitt. Wird die Ausnehmung durch einen Spalt gebildet, so ist beispielsweise ein V-förmiger oder wannenförmiger Querschnitt der Ausnehmung möglich.

Bevorzugt liegen bei der in etwa rechtwinkligen Anordnung der reflektierenden Flächen die N zweiten optischen Eingänge E2(n) und die N ersten optischen Ausgänge A1(n) auf der gleichen Seite des Grundkörpers.

Der Grundkörper, mit dem die erfindungsgemäßen optischen Mehrfachschalter realisiert werden, kann aus einem oder mehreren Stücken bestehen, wobei die Ausnehmungen an ihren Enden vorteilhafterweise durch Deckplatten verschlossen werden.

Flächen an denen Reflexionen stattfinden, sollten, um Streuung zu vermeiden, eine ausreichend hohe optische Qualität aufweisen. Flächen durch die Licht nur transmittiert wird, brauchen, da sie im transmittierenden Schaltzustand mit dem optisch dichteren Stoff in Kontakt stehen, keine hohe optische Oberflächenqualität aufzuweisen.

Der Grundkörper sollte zumindest im Strahlengang aus einem in dem verwendeten Wellenlängenbereich transparenten Material bestehen. Er kann auch völlig aus einem oder verschiedenen transparenten Materialien gefertigt sein. Als Materialien kommen beispielsweise transparente Polymere, wie gegebenenfalls fluoriertes Polymethylmethacrylat (PMMA), Gläser oder nach einem Sol-Gel-Prozeß hergestellte transparente Materialien in Frage.

Neben den beschriebenen Ausnehmungen kann der Grundkörper auch eine oder mehrere weitere Ausnehmungen aufweisen. Diese können so geformt und zusätzlich strukturiert sein, daß sie zur Aufnahme und Halterung von einzelnen oder zu Faserbändchen zusammengefaßten Lichtwellenleitern geeignet sind. Darüberhinaus können vorteilhaft Vorrichtungen zur Aufnahme von Fasersteckern integriert sein, um ein einfaches Verbinden mit den optischen Ein- und Ausgangslichtwellenleitern zu ermöglichen.

Mit solchen zusätzlichen Ausnehmungen können auch optische Elemente, wie Kugellinsen, Mikrolinsen, GRIN-Linsen und/ oder Zylinderlinsen, zur Kollimierung und/ oder Fokussierung, insbesondere von aus den Lichtwellenleitern divergierend heraustretenden Lichtstrahlen, im Grundkörper aufgenommen werden. Denkbar ist auch die Aufnahme von beispielsweise zeilenförmigen Mikrolinsenfeldern zur Bündelung von Lichtstrahlen mehrerer optischer Kanäle.

Es ist aber auch denkbar, eine oder mehrere zusätzliche Ausnehmungen so zu formen und im Strahlengang anzuordnen, daß durch sie hindurchtretende Lichtstrahlen gebündelt werden. Neben der Form dieser Ausnehmungen kann durch Variation des Brechungsindexverhältnisses zwischen dem transparenten Teil des Grundkörpers und dem Stoff oder Stoffgemisch im Innern dieser zusätzlichen Ausnehmungen die optischen Eigenschaften dieser als optische Komponenten dienenden Ausnehmungen eingestellt werden.

Darüberhinaus können die beiden Flächen der Ausnehmung bzw. der beiden Ausnehmungen, über die eine wahlweise Reflexion oder Transmission erreicht wird, und/ oder die beiden zusätzlichen Flächen des Grundkörpers so, beispielsweise als Zylinderlinse oder Mikrolinsenarray, geformt sein, daß im reflektierenden Schaltzustand Licht unter Bündelung reflektiert wird. Ebenfalls ist es denkbar, den Brechungsindex des optisch dichteren Stoffs so im Vergleich zu dem Brechungsindex des transparenten Materials des Grundkörpers einzustellen und die Ausnehmung bzw. die Ausnehmungen so zu formen, daß das transmittierte Licht gebündelt wird.

Bei dem im reflektierenden Schaltzustand in der Ausnehmung bzw. den beiden Ausnehmungen vorhandenen optisch dünneren Stoff oder Stoffgemisch, kann es sich beispielsweise um ein inertes Gas wie Argon oder auch um Luft handeln. Als optisch dichteren Stoff kann eine Flüssigkeit oder ein Flüssigkeitsgemisch verwendet werden. So eignet sich zur Anpassung des Brechungsindex an PMMA ein Gemisch aus Dekalin und Tetralin. Als optisch dünnerer Stoff könnte ebenfalls eine vorzugsweise mit dem optisch dichteren Stoff nicht mischbare Flüssigkeit verwendet werden.

Es kann vorteilhaft sein, zumindest die an der Reflexion beteiligten Flächen der Ausnehmungen zur Veränderung ihrer Benetzbarkeit einer zusätzlichen beispielsweise chemischen- bzw. plasmachemischen Behandlung zu unterziehen oder mit einem oder mehreren geeigneten Materialien zu beschichten. In diesem Zusammenhang kann auch eine Feinstrukturierung der relevanten Oberflächen von Vorteil sein.

Als Vorrichtung zum wahlweisen Füllen der an der Reflexion und Transmission beteiligten Ausnehmung kann beispielsweise außerhalb der Ausnehmung ein mit dieser verbundenes, in seinem Volumen veränderliches Flüssigkeitsreservoir vorgesehen sein. Durch eine auf das Flüssigkeitsreservoir von außen beispielsweise durch ein elektrisches Piezoelement, ein thermoelektrisches Element oder eine elektromagnetische Anordnung einwirkende Kraft wird nun der optisch dichtere Stoff oder der optisch dünnere Stoff in die Ausnehmung hineingedrückt, wodurch der optische Mehrfachschalter in den transmittierenden bzw. reflektierenden Schaltzustand umschaltet. Sind zwei Ausnehmungen an der wahlweisen Reflexion oder Transmission beteiligt, so können diese je eine Füllvorrichtung oder eine mit diesen verbundene gemeinsame Füllvorrichtung aufweisen.

In einer anderen Ausführungsform gelangt der optisch dichtere Stoff durch mit der Erwärmung bzw. dem Abkühlen des optisch dichteren und/ oder des optisch dünneren Stoffs einhergehenden thermischen Ausdehnung bzw. Kontraktion in die betreffende Ausnehmung. Hierzu weist die Vorrichtung mindestens ein schaltbares, mit dem optisch dünneren Stoff und/ oder optisch dichteren Stoff in Kontakt stehendes Heizelement und/ oder Kühlelement auf.

In einer weiteren Ausführungsform ist mindestens eine Mikropumpe zum wahlweise Leeren oder Füllen der Ausnehmung vorgesehen.

Die Vorrichtung zum Füllen bzw. Leeren der Ausnehmung mit einem optisch dünneren bzw. optisch dichteren Stoff kann im Grundkörper oder außerhalb des Grundkörpers angebracht sein.

Zumindest Teile des Grundkörpers und/ oder der Füllvorrichtung können vorteilhaft mit mikrotechnischen Verfahren, beispielsweise mittels des LIGA-Verfahrens, hergestellt werden.

Im folgenden werden mehrere Ausführungsbeispiele der Erfindung unter Bezugnahme auf die Zeichnungen näher erläutert.

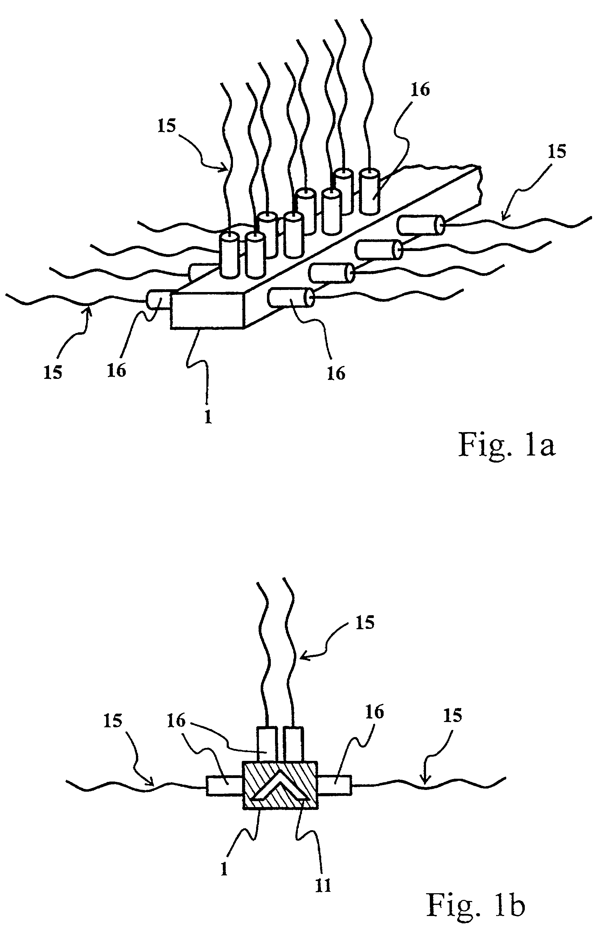

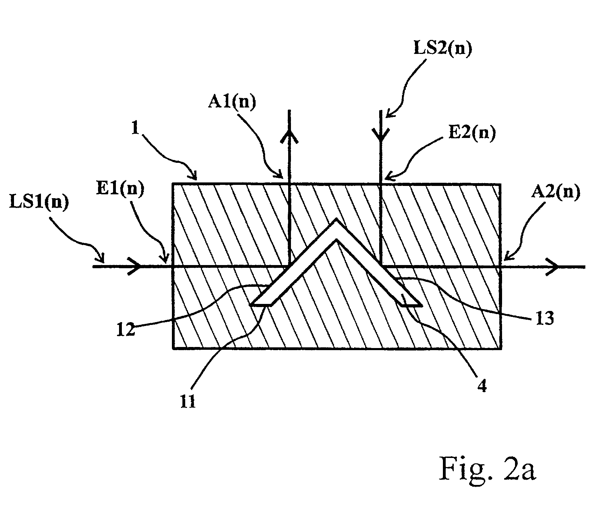

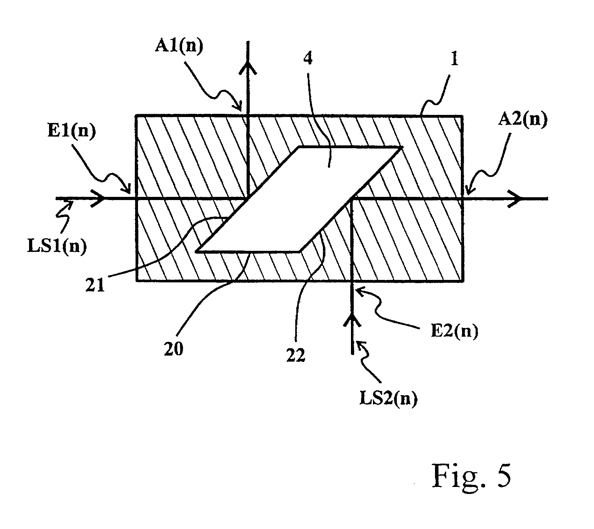

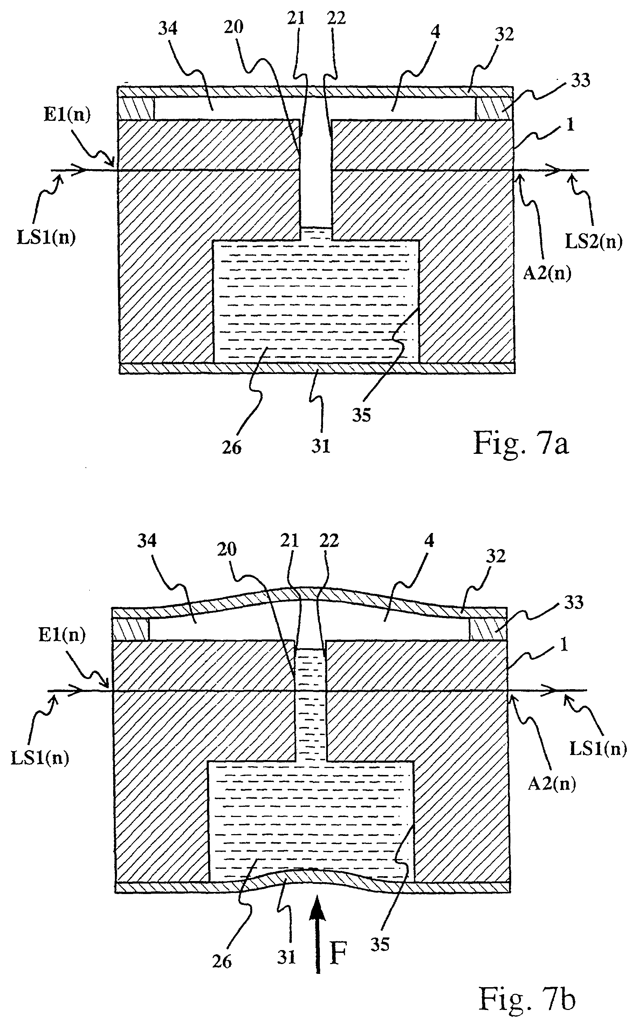

Es zeigen in schematischer Darstellung:
Figur 1a
   einen optischen Mehrfachschalter mit über GRIN-Linsen angekoppelten Lichtwellenleitern in perspektivischer Darstellung,
Figur 1b
   einen Schnitt durch den optischen Mehrfachschalter von Figur 1a mit einer V-förmigen Ausnehmung,
Figur 2a
   den Schnitt entsprechend Figur 1b zusammen mit dem Strahlengang im reflektierenden Schaltzustand,
Figur 2b
   einen Schnitt durch den optischen Mehrfachschalter nach Figur 2a in der Ebene zweier einfallender Lichtstrahlen im transmittierenden Schaltzustand,
Figur 3
   einen Schnitt durch einen optischen Mehrfachschalter mit zwei Ausnehmungen, deren reflektierende Flächen etwa im rechten Winkel zueinander stehen im reflektierenden Schaltzustand,
Figur 4
   einen Schnitt durch einen optischen Mehrfachschalter mit zwei Ausnehmungen, deren reflektierende Flächen parallel zueinander angeordnet sind im reflektierenden Schaltzustand,
Figur 5
   einen Schnitt durch einen optischen Mehrfachschalter mit einer parallelogrammförmigen Ausnehmung im reflektierenden Schaltzustand,
Figur 6
   einen Schnitt durch einen optischen Mehrfachschalter mit einer Ausnehmung und zwei zusätzlichen reflektierenden Flächen am Grundkörper im transmittierenden Schaltzustand,
Figur 7a
   einen Schnitt senkrecht zur Schnittebene des in Figur 5 gezeigten optischen Mehrfachschalters im reflektierenden Zustand, mit Vorrichtung zum Füllen der Ausnehmung,
Figur 7b
   den optischen Mehrfachschalter nach Figur 7a im transmittierenden Zustand,

Figur 1a zeigt in schematischer perspektivischer Darstellung einen erfindungsgemäßen optischen Mehrfachschalter mit über GRIN-Linsen 16 angekoppelten Lichtwellenleitern 15. In dem gezeigten Ausschnitt sind 4x4 Lichtwellenleiter, beispielsweise Glasfasern, die über GRIN-Linsen 16 zur Kollimierung der Lichtstrahlen an den Grundkörper 1 gekoppelt sind, erkennbar. Anstelle der hier gezeigten einzelnen Lichtwellenleiter könnten auch Faserbändchen beispielsweise über Steckverbindungen an den optischen Mehrfachschalter angekoppelt sein. Nicht dargestellt sind eine sich durch den Grundkörper 1 erstreckende Ausnehmung sowie eine Vorrichtung zum wahlweise Füllen der Ausnehmung mit einem optisch dichteren oder optisch dünneren Stoff. Sich gegenüberliegende Lichtwellenleiter sind im transmittierenden Schaltzustand miteinander verbunden. Senkrecht zueinander stehende Lichtwellenleiter sind im reflektierenden Schaltzustand miteinander verbunden.

Figur 1b zeigt einen Schnitt durch den Mehrfachschalter nach Figur 1a mit zwei sich gegenüberliegenden und zwei senkrecht hierzu stehenden Lichtwellenleitern. Im Innern des Grundkörpers 1 befindet sich eine sich durch den gesamten Grundkörper erstreckende V-förmige Ausnehmung 11.

In Figur 2a ist der Strahlengang in einem optischen Mehrfachschalter, wie er in Figur 1 b dargestellt ist, im reflektierenden Schaltzustand angedeutet.
Ein aus dem Eingang E1(n) einfallender Lichtstrahl LS1(n) trifft unter einem Winkel von etwa 45° auf eine durch eine V-förmige Ausnehmung 11 gebildete Fläche 12. Da sich im Innern der Ausnehmung 11 des transparenten Grundkörpers 1 ein optisch dünnerer Stoff 4, beispielsweise Luft, befindet, wird der einfallende Lichtstrahl LS1(n) in Richtung des optischen Ausgangs A1(n) totalreflektiert. Gleichzeitig wird der aus dem Eingang E2(n) einfallende Lichtstrahl LS2(n) an der Fläche 13 in Richtung des Ausgangs A2(n) totalreflektiert. In einem optischen Mehrfachschalter können mehrere solcher Ein- und Ausgänge nebeneinander angeordnet sein, wie dies in Figur 1a mit 2x4 parallelen optischen Eingängen und 2x4 parallelen optischen Ausgängen gezeigt wurde. Die einfallenden Lichtstrahlen LS1(n) und LS2(n) liegen jeweils in einer Ebene, wobei beide Ebenen zueinander in einem Winkel von 90° liegen.

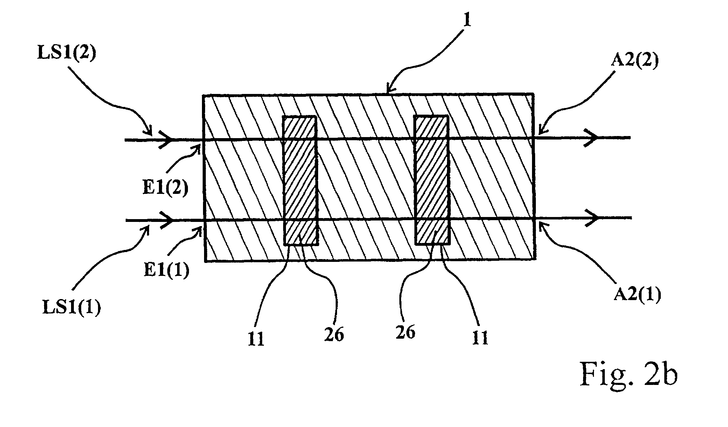

Der transmittierende Schaltzustand eines optischen Mehrfachschalters nach Figur 2a mit 2x2 parallelen optischen Eingängen und 2x2 parallelen optischen Ausgängen ist in Figur 2b in der Ebene der einfallenden parallelen Lichtstrahlen LS1(1) und LS1(2) dargestellt. Die beiden Lichtstrahlen treten durch die mit einem optisch dichteren Stoff 26 gefüllte Ausnehmung 11 hindurch. Die parallelen optischen Eingänge E1(1) und E1(2) sind mit den parallelen optischen Ausgängen A2(1) bzw. A2(2) verbunden.
Nicht gezeigt sind die beiden parallelen optischen Ausgänge A1(1) und A1(2) sowie die beiden parallelen optischen Eingänge E2(1) und E2(2), die senkrecht zu der gezeigten Ebene liegen.

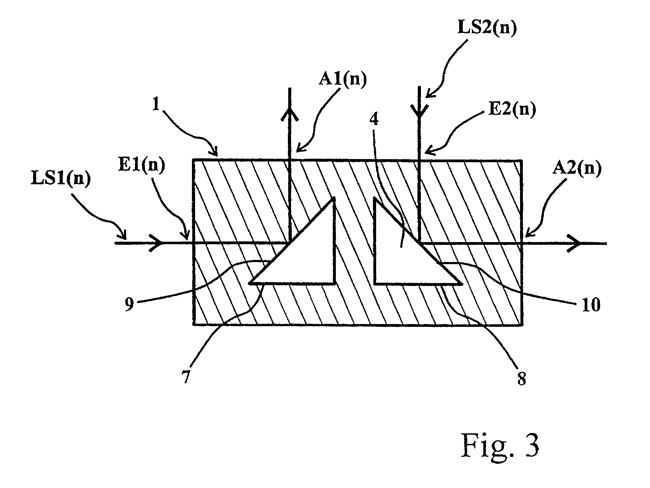

Der optische Mehrfachschalter nach Figur 2a kann auch mit zwei dreieckförmigen Ausnehmungen 7,8 im Grundkörper 1 realisiert werden (Figur 3). Die durch die Ausnehmungen 7,8 gebildeten Flächen 9 und 10 liegen etwa im rechten Winkel zueinander. In dem hier dargestellten reflektierenden Schaltzustand enthalten beide Ausnehmungen 7, 8 einen optisch dünneren Stoff 4, so daß die Eingänge E1(n) und E2(n) mit den Ausgängen A1(n) bzw. A2(n) verbunden sind.

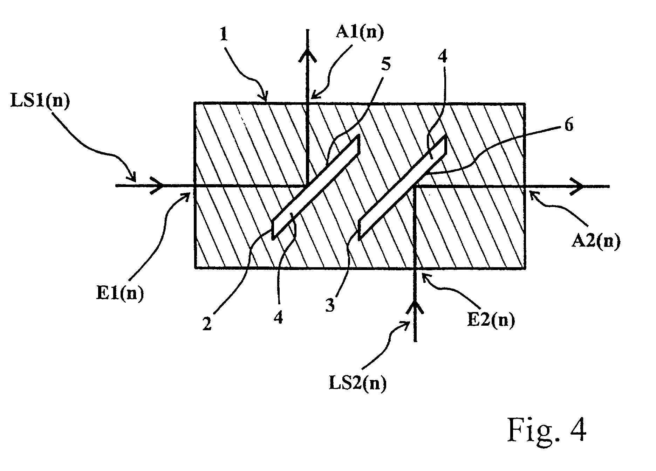

In Figur 4 liegen die durch die viereckförmigen Ausnehmungen 2, 3 gebildeten Flächen 5, 6 in etwa parallel zueinander, wodurch der Eingang E2(n) und der Ausgang A1(n) auf sich gegenüberliegenden Seiten des Grundkörpers 1 liegen.

Der Mehrfachschalter nach Figur 4 kann auch unter Beibehaltung der Funktionalität mit nur einer beispielsweise parallelogrammförmigen Ausnehmung realisiert werden, wie dies in Figur 5 dargestellt ist. Hier werden die beiden reflektierenden Flächen 21, 22 durch eine Ausnehmung 20 gebildet.

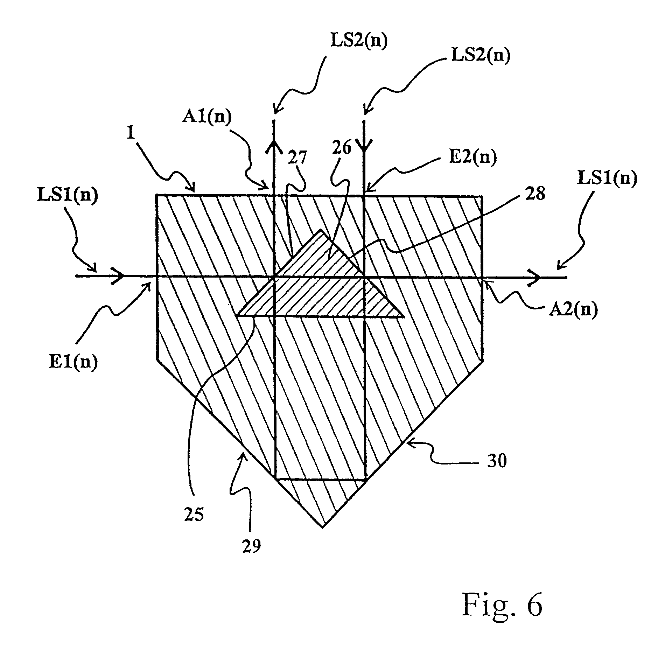

Figur 6 zeigt einen optischen Mehrfachschalter mit einer dreieckförmigen Ausnehmung 25 und zwei zusätzlichen reflektierenden Flächen 29, 30 am Grundkörper 1. Die Fläche 30 liegt gegenüber den Eingängen E1(n) und die Fläche 29 gegenüber den Ausgängen A1(n). In dem dargestellten transmittierenden Schaltzustand wird der Lichtstrahl LS1(n) durch die Seitenflächen 27 und 28 der Ausnehmung 25 nicht abgelenkt, da die Ausnehmung 25 mit einem optisch dichteren, in etwa an den Brechungsindex des Materials des Grundkörpers 1 angepaßten Stoff 26 gefüllt ist. Der aus dem Eingang E2(n) einfallende Lichtstrahl LS2(n) tritt durch die Ausnehmung 25 unabgelenkt hindurch und trifft unter zweimaliger Totalreflexion an den Flächen 30 und 29 des Grundkörpers 1 auf den optischen Ausgang A1(n).

Im reflektierenden Schaltzustand zeigt der optische Mehrfachschalter nach Figur 6 die gleiche Funktionalität wie der in Figur 2a dargestellte Schalter. Ist nämlich die Ausnehmung 25 mit einem optisch dünneren Stoff gefüllt, so werden über Totalreflexion an den Flächen 27 und 28 die optischen Eingänge E1(n) und E2(n) mit den optischen Ausgängen A1(n) bzw. A2(n) optisch verbunden.

Die zusätzlichen, in einem Winkel von 90° zueinander liegenden Flächen 29, 30 können, wie in diesem Beispiel, zwei Außenflächen des Grundkörpers 1 entsprechen oder durch eine oder mehrere zusätzliche, mit einem im Vergleich zum Grundkörper optisch dünneren Stoff gefüllten Ausnehmungen des Grundköpers gebildet sein.

Der optische Mehrfachschalter nach Figur 6 ermöglicht auf Grund der senkrechten Anordnung der optischen Eingänge E2(n) und der optischen Ausgänge A1(n) zu den optischen Eingängen E1(n) und optischen Ausgängen A2(n) eine einfache Realisierung eines optischen Bussystems, analog den in der Kommunikationstechnik bekannten Bussystemen mit senkrecht zu den elektrischen Leiterbahnen angeordneten Steckkarten und Steckplatinen.

Figur 7a zeigt einen Schnitt durch einen optischen Mehrfachschalter beispielsweise nach Figur 5 entlang des einfallenden Lichtstrahls LS1(n) und senkrecht zu der in Figur 5 gezeigten Schnittebene. In dem gezeigten reflektierenden Schaltzustand ist die Ausnehmung 20 im Bereich des Strahlengangs mit dem optisch dünneren Stoff 4 gefüllt. Der aus dem Eingang E1(n) einfallende Lichtstrahl wird an der Fläche 21 reflektiert. Der reflektierte Strahl sowie der aus dem Eingang E2(n) einfallende Lichtstrahl liegen etwa senkrecht zu der Schnittebene. Der an der Fläche 22 reflektierte Lichtstrahl LS2(n) trifft auf den Ausgang A2(n). Mit der Ausnehmung 20 sind eine mit dem optisch dichteren Stoff 26 gefüllte Kammer 35 und ein Hohlraum 34 verbunden. Die Kammer 35 in dem Grundkörper 1 ist nach außen mit einer Membran 31 abgeschlossen. Der Hohlraum 34 ist durch eine sich auf Abstandshaltern 33 befestigten Membran 32 abgeschlossen.

Durch Einwirken einer äußeren Kraft F auf die Membran 31 verkleinert sich das Volumen der Kammer 35, wodurch der optisch dichtere Stoff 26, eine Flüssigkeit, in die Ausnehmung 20 gedrückt wird. Entsprechend der Volumenverkleinerung der Kammer 35 kann sich das Volumen des Hohlraums 34 durch eine Dehnung der Membran 32 erweitern. Wenn der optisch dünnere Stoff 4 ein Gas ist, ist es aufgrund dessen Kompressibilität auch denkbar, statt der Membran 32 einen starren Abschluß des Hohlraums 34 vorzusehen. Der resultierende transmittierende Schaltzustand, bei dem der optische Eingang E1(n) mit dem optischen Ausgang A2(n) verbunden ist, ist in Figur 7b dargestellt. Die auf die Membran 31 wirkende Kraft F kann beispielsweise durch eine elektromagnetische oder piezoelektrische Betätigungseinrichtung hervorgerufen werden. Es ist auch eine thermoelektrische Einrichtung beispielsweise mittels einer Bimetallanordnung denkbar.

### Bezugszeichenliste

- 1: Grundkörper
- 2: Ausnehmung mit viereckigem Querschnitt
- 3: Ausnehmung mit viereckigem Querschnitt
- 4: optisch dünnerer Stoff
- 5: reflektierende Fläche
- 6: reflektierende Fläche
- 7: Ausnehmung mit dreieckigem Querschnitt
- 8: Ausnehmung mit dreieckigem Querschnitt
- 9: reflektierende Fläche
- 10: reflektierende Fläche
- 11: Ausnehmung mit V-förmigem Querschnitt
- 12: reflektierende Fläche
- 13: reflektierende Fläche
- 15: Lichtwellenleiter
- 16: GRIN-Linse
- 20: Ausnehmung mit parallelogrammförmigem Querschnitt
- 21: reflektierende Fläche
- 22: reflektierende Fläche
- 25: Ausnehmung mit dreieckförmigem Querschnitt
- 26: optisch dichterer Stoff
- 27: Fläche
- 28: Fläche
- 29: reflektierende Fläche des Grundkörpers
- 30: reflektierende Fläche des Grundkörpers
- 31: Membran
- 32: Membran
- 33: Abstandshalter
- 34: Hohlraum
- 35: Kammer

## Patentansprüche

1. Optischer Mehrfachschalter mit N ersten optischen Eingängen E1(n), wobei die N ersten optischen Eingänge E1(n) wahlweise auf N erste optische Ausgänge A1(n) oder auf N zweite optische Ausgänge A2(n) geschaltet werden können,
der einen Grundkörper (1) aufweist, der zumindest im Bereich der Strahlengänge transparent ist,
und der Ausnehmungen (2, 3; 7, 8; 11; 20) zur wahlweisen Reflexion oder Transmission von Licht aufweist,
wobei, wenn die Ausnehmungen mit mindestens einem im Vergleich zum transparenten Material des Grundkörpers optisch dünneren Stoff (4) gefüllt sind, die einfallenden N Lichtstrahlen von Flächen (5, 6; 9,10; 12, 13; 21, 22) der Ausnehmungen totalreflektiert werden, und
wobei, wenn die Ausnehmungen mit mindestens einem Stoff (26) gefüllt sind, dessen Brechungsindex etwa dem des transparenten Materials des Grundkörpers entspricht, die einfallenden N Lichtstrahlen durch die Ausnehmungen hindurchgehen, und
der mindestens eine Vorrichtung aufweist, die die Ausnehmungen wahlweise im reflektierenden Schaltzustand mit dem optisch dünneren Stoff (4) oder im transmittierenden Schaltzustand mit dem optisch dichteren Stoff (26) füllt,
**dadurch gekennzeichnet,**
**daß** der optische Mehrfachschalter zusätzlich N zweite optische Eingänge E2(n) aufweist, und
**daß** N größer gleich 2 ist, und
**daß** der Grundkörper (1) maximal 2 Ausnehmungen (2, 3; 7, 8; 11; 20) zur wahlweisen Reflexion oder Transmission von Licht aufweist,
wobei zwei Flächen (5, 6; 9, 10; 12, 13; 21, 22) der Ausnehmungen so geformt und so im Strahlengang der einfallenden 2xN Lichtstrahlen angeordnet sind,
**daß** im reflektierenden Schaltzustand die N ersten optischen Eingänge E1(n) mit den N ersten optischen Ausgängen A1(n) und die N zweiten optischen Eingänge E2(n) mit den N zweiten optischen Ausgängen A2(n) optisch verbunden sind, und
**daß** im transmittierenden Schaltzustand die N ersten optischen Eingänge E1(n) mit den N zweiten optischen Ausgängen A2(n) optisch verbunden sind.

2. Optischer Mehrfachschalter nach Anspruch 1, **dadurch gekennzeichnet, daß** die beiden Flächen (5, 6 bzw. 21, 22) der Ausnehmungen (2, 3) bzw. der Ausnehmung (20), an denen im reflektierenden Schaltzustand die einfallenden Lichtstrahlen totalreflektiert werden, parallel zueinander angeordnet sind.

3. Optischer Mehrfachschalter mit N ersten optischen Eingängen E1(n), wobei die N ersten optischen Eingänge E1(n) wahlweise auf N erste optische Ausgänge A1(n) oder auf N zweite optische Ausgänge A2(n) geschaltet werden können,
der einen Grundkörper (1) aufweist, der zumindest im Bereich der Strahlengänge transparent ist,
und der Ausnehmungen (25) zur wahlweisen Reflexion oder Transmission von Licht aufweist,
wobei, wenn die Ausnehmungen (25) mit mindestens einem im Vergleich zum transparenten Material des Grundkörpers optisch dünneren Stoff (4) gefüllt sind, die einfallenden N Lichtstrahlen von Flächen (27, 28) der Ausnehmungen (25) totalreflektiert werden, und
wobei, wenn die Ausnehmungen (25) mit mindestens einem Stoff (26) gefüllt sind, dessen Brechungsindex etwa dem des transparenten Materials des Grundkörpers entspricht, die einfallenden N Lichtstrahlen durch die Ausnehmungen (25) hindurchgehen, und
der mindestens eine Vorrichtung aufweist, die die Ausnehmungen (25) wahlweise im reflektierenden Schaltzustand mit dem optisch dünneren Stoff (4) oder im transmittierenden Schaltzustand mit dem optisch dichteren Stoff (26) füllt, -
**dadurch gekennzeichnet,**
**daß** der optische Mehrfachschalter zusätzlich N zweite optische Eingänge E2(n) aufweist, und
**daß** N größer gleich 1 ist, und
**daß** der Grundkörper (1) maximal 2 Ausnehmungen (25) zur wahlweisen Reflexion oder Transmission von Licht aufweist, und
**daß** zwei Flächen (29, 30) des Grundkörpers (1) und zwei Flächen (27, 28) der Ausnehmungen (25) so geformt und so im Strahlengang der einfallenden 2xN Lichtstrahlen angeordnet sind,
**daß** im reflektierenden Schaltzustand die N ersten optischen Eingänge E1(n) mit den N ersten optischen Ausgängen A1(n) und die N zweiten optischen Eingänge E2(n) mit den N zweiten optischen Ausgängen A2(n) optisch verbunden sind, und
**daß** im transmittierenden Schaltzustand die N ersten und die N zweiten optischen Eingänge E1(n) bzw. E2(n) mit den N zweiten bzw. den N ersten optischen Ausgängen A2(n) bzw. A1(n) optisch verbunden sind.

4. Optischer Mehrfachschalter nach Anspruch 3, **dadurch gekennzeichnet, daß** von den beiden Flächen (29, 30) des Grundkörpers (1) eine Fläche (29) den N ersten optischen Ausgängen A1(n) und eine Fläche (30) den N zweiten optischen Eingängen E2(n) gegenüberliegt.

5. Optischer Mehrfachschalter nach Anspruch 4, **dadurch gekennzeichnet, daß** die beiden den Eingängen E2(n) und den Ausgängen A1(n) gegenüberliegenden Flächen (29, 30) des Grundkörpers (1) in einem Winkel von 70° bis 110° zueinander angeordnet sind.

6. Optischer Mehrfachschalter nach einem der Ansprüche 3 bis 5, **dadurch gekennzeichnet, daß** die beiden Flächen (29, 30) des Grundkörpers durch mindestens eine zusätzliche Ausnehmung im Grundkörper gebildet werden.

7. Optischer Mehrfachschalter nach einem der vorherigen Ansprüche, **dadurch gekennzeichnet, daß** N größer gleich 2 ist, und daß die N ersten optischen Eingänge E1(n) und die N zweiten optischen Eingänge E2(n) derart angeordnet sind, daß jeweils die N ersten einfallenden Lichtstrahlen LS1(n) und die N zweiten einfallenden Lichtstrahlen LS2(n) in einer Ebene liegen, wobei beide Ebenen zueinander in einem Winkel von 70° bis 110° liegen.

8. Optischer Mehrfachschalter nach einem der vorherigen Ansprüche, **dadurch gekennzeichnet, daß** der Grundkörper (1) genau zwei Ausnehmungen (2, 3 bzw. 7, 8) zur wahlweisen Reflexion oder Transmission von Licht aufweist.

9. Optischer Mehrfachschalter nach Anspruch 8, **dadurch gekennzeichnet, daß** die beiden Flächen (9,10) der Ausnehmungen (7, 8), an denen im reflektierenden Schaltzustand die einfallenden Lichtstrahlen totalreflektiert werden, in einem Winkel von 70° bis 110° zueinander angeordnet sind.

10. Optischer Mehrfachschalter nach einem der Ansprüche 1 bis 7, **dadurch gekennzeichnet, daß** der Grundkörper genau eine Ausnehmung (11, 20, 25) zur wahlweisen Reflexion oder Transmission von Licht aufweist.

11. Optischer Mehrfachschalter nach Anspruch 10, **dadurch gekennzeichnet, daß** die beiden Flächen (12, 13; 27, 28) der Ausnehmung (11; 25), an denen im reflektierenden Schaltzustand die einfallenden Lichtstrahlen totalreflektiert werden, in einem Winkel von 70° bis 110° zueinander angeordnet sind.

12. Optischer Mehrfachschalter nach einem der vorhergehenden Ansprüche, **dadurch gekennzeichnet, daß**
mindestens eine der reflektierenden Flächen so geformt ist, daß auftreffendes Licht durch Reflexion an dieser Fläche zumindest teilweise gebündelt wird.

13. Optischer Mehrfachschalter nach einem der vorhergehenden Ansprüche, **dadurch gekennzeichnet, daß**
der Grundkörper mindestens eine weitere Ausnehmung zur Aufnahme und Halterung von Lichtwellenleitern, insbesondere von einzelnen Glas- oder Kunststoffasern, deren Faserbändchen oder Fasersteckem, aufweist.

14. Optischer Mehrfachschalter nach einem der vorhergehenden Ansprüche, **dadurch gekennzeichnet, daß**
der Grundkörper mindestens eine weitere Ausnehmung zur Aufnahme und Halterung von mikrooptischen Elementen, insbesondere Mikrolinsen oder GRIN-Linsen, aufweist.

15. Optischer Mehrfachschalter nach einem der vorhergehenden Ansprüche, **dadurch gekennzeichnet, daß**
der Grundkörper im Strahlengang mindestens eine weitere so geformte Ausnehmung aufweist, daß auf diese Ausnehmung treffende Lichtstrahlen unter Bündelung derselben transmittiert werden.

16. Optischer Mehrfachschalter nach einem der vorhergehenden Ansprüche, **dadurch gekennzeichnet, daß** der Grundkörper integriert optische Wellenleiterstrukturen aufweist.

17. Optischer Mehrfachschalter nach einem vorhergehenden Ansprüche, **dadurch gekennzeichnet, daß** die Ausnehmungen (2, 3; 7, 8; 11; 20; 25) mit mindestens einer in ihrem Volumen veränderbaren Kammer (35) verbunden sind, wobei die Kammer (35) zumindest teilweise mit dem optisch dichteren Stoff (26) gefüllt ist, und daß zum Umschalten vom reflektierenden in den transmittierenden Schaltzustand das Volumen der Kammer (35) durch mindestens eine, beispielsweise elektromagnetisch, thermoelektrisch oder piezoelektrisch angetriebene Vorrichtung verkleinert wird und dadurch der optisch dichtere Stoff (26) in die Ausnehmungen gedrückt wird.

18. Optischer Mehrfachschalter nach einem der Ansprüche 1 bis 16, **dadurch gekennzeichnet, daß** die zum wahlweise Füllen der an der wahlweisen Reflexion oder Transmission beteiligten Ausnehmungen (2, 3; 7, 8; 11; 20; 25) vorgesehenene Vorrichtung mindestens eine mit den Ausnehmungen verbundene Mikropumpe aufweist.

19. Optischer Mehrfachschalter nach einem der Ansprüche 1 bis 16, **dadurch gekennzeichnet, daß** die zum wahlweise Füllen der an der wahlweisen Reflexion oder Transmission beteiligten Ausnehmungen (2, 3; 7, 8; 11; 20; 25) vorgesehenene Vorrichtung mindestens ein schaltbares, mit dem optisch dünneren Stoff und/ oder optisch dichteren Stoff in Kontakt stehendes Heizelement und/ oder Kühlelement aufweist.

20. Verwendung eines oder mehrerer optischer Mehrfachschalter nach einem der Ansprüche 1 bis 19 zur Realisierung eines optischen Bussystems.

## Claims

1. Optical multiple switch with N first optical inputs E1(n), wherein the N first optical inputs E1(n) can optionally be switched to N first optical outputs A1(n) or to N second optical outputs A2(n)
which has a main body (1), which is transparent at least in the region of the ray paths,
and which has recesses (2, 3; 7,8; 11; 20) for the optional reflection or transmission of light,
wherein, if the recesses are filled with at least one substance (4) which is optically thinner in comparison with the transparent material of the main body, the incident N light rays are totally reflected from surfaces (5, 6: 9, 10; 12, 13; 21, 22) of the recesses, and
wherein, if the recesses are filled with at least one substance (26) whose refractive index corresponds approximately to that of the transparent material of the main body, the incident N light rays pass through the recesses, and
which has at least one device, which optionally fills the recesses, in the reflecting switch condition with the optically thinner substance (4), or in the transmitting condition with the optically denser substance (26),
**characterised in that**,
the optical multiple switch additionally has N second optical inputs E2(n) and,
N is greater than equal to 2 and
the main body (1) has a maximum of 2 recesses (2, 3; 7, 8; 11, 20) for the optional reflection or transmission of light,
wherein two surfaces (5, 6; 9, 10; 12, 13; 21, 22) of the recesses are so formed and disposed in the ray path of the incident 2xN light rays,
that in the reflecting switch condition the N first optical inputs E1(n) are optically connected with the N first optical outputs A1(n) and the N second optical inputs E2(n) are optically connected with the second optical outputs A2(n), and
that in the transmitting switch condition the N first optical inputs E1(n) are optically connected with the N second optical outputs A2(n).

2. Optical multiple switch according to Claim 1, **characterized in that** both surfaces (5,6 or 21,22) of the recesses (2,3) or the recess (2) at which in the reflecting switch condition the incident light rays are totally reflected, are disposed parallel to each other.

3. Optical multiple switch with N first optical inputs E1(n), wherein the N first optical inputs E1(n) can optionally be switched to N first optical outputs A1(n) or to N second optical outputs A2(n),
which has a main body (1), which is transparent at least in the region of the ray paths,
and which has recesses (25) for the optional reflection or transmission of light,
wherein, if the recesses (25) are filled with at least one substance (4) which is optionally thinner in comparison to the transparent material of the main body, the incident N light rays are totally reflected by surfaces (27, 28) of the recesses (25), and
wherein, if the recesses (25) are filled with at least one substance (26), whose refractive index corresponds approximately to that of the transparent material of the main body, the incident N light rays pass through the recesses (25), and
which has at least one device, which fills the recesses (25) optionally in the reflecting switch condition with the optically thinner substance (4) or in the transmitting switch condition with the optically denser substance (26),
**characterized in that**,
the optical multiple switch additionally has N second optical inputs E2(n), and
N is greater than equal to 1, and
the main body (1) has a maximum of 2 recesses (25) for optional reflection or transmission of light, and
two surfaces (29, 30) of the main body (1) and two surfaces (27, 28) of the recesses (25) are so formed and disposed in the ray path of the incident 2xN light rays,
that in the reflecting switch condition the N first optical inputs E1(n) are optically connected with the N first optical outputs A1(n) and the N second E2(n) optical inputs are optically connected with the second optical outputs A2(n), and
that in the transmitting switch condition the N first and the N second optical inputs E1(n) / E2(n) are optically connected with the N second/first optical outputs A2(n)/A1(n).

4. Optical multiple switch according to Claim 3, **characterized in that**, of the two surfaces (29, 30) of the main body (1) one surface (29) lies opposite the N first optical outputs A1(n), and one surface (30) lies opposite the N second optical inputs E2(n).

5. Optical multiple switch according to Claim 4, **characterized in that** the two surfaces (29, 30) lying opposite the inputs E2(n) and the outputs A1(n) of the main body (1) are disposed at an angle of 70° to 110° to each other.

6. Optical multiple switch according to any one of Claims 3 to 5, **characterized in that** the two surfaces (29, 30) of the main body (1) are formed by at least one additional recess in the main body.

7. Optical multiple switch according to any one of the previous claims, **characterized in that** N is greater than equal to 2, and that the N first optical inputs E1(n) and the N second optical inputs E2(n) are disposed in such a way that the N first incident light rays LS1(n) and the N second incident light rays LS2(n) each lie in a plane such that the two planes lie at an angle of 70° to 110° to each other.

8. Optical multiple switch according to any one of the previous claims, **characterized in that** the main body (1) has precisely two recesses(2, 3 or 7, 8) for the optional reflection or transmission of light.

9. Optical multiple switch according to Claim 8, **characterized in that** the two surfaces (9, 10) of the recesses (7, 8) at which, in the reflecting condition the incident light rays are totally reflected, are disposed at an angle of 70° to 110° to each other.

10. Optical multiple switch according to any one of Claims 1 to 7, **characterized in that** the main body has precisely one recess (11, 20, 25) for the optional reflection or transmission of light.

11. Optical multiple switch according to Claim 10 **characterized in that** the two surfaces (12, 13; 27, 28) of the recess (11; 25) at which, in the reflecting switch condition the incident light rays are totally reflected, are disposed at an angle of 70° to 110° to each other.

12. Optical multiple switch according to any one of the previous claims, **characterized in that** at least one of the reflecting surfaces is so formed, that incident light is at least partially bundled by reflection on this surface.

13. Optical multiple switch according to any one of the previous claims, **characterized in that** the main body has at least one further recess for the taking up and holding of light wave conductors, especially of individual glass or plastic fibres, their fibre bands or fibre plugs.

14. Optical multiple switch according to any one of the previous claims, **characterized in that** the main body has at least one further recess for the taking up and holding of microscopic elements, especially microlenses or GRIN lenses.

15. Optical multiple switch according to any one of the previous claims, **characterized in that** the main body has in the ray path at least one further recess formed so that light rays incident on this recess are transmitted with bundling thereof.

16. Optical multiple switch according to any one of the previous claims, **characterized in that** the main body has integrated optical wave conductor structures.

17. Optical multiple switch according to any one of the previous claims, **characterized in that** the recesses (2, 3; 7, 8; 11; 20; 25) are connected with at least one chamber (35) which is variable in volume, the chamber (35) being at least partially filled with the optically denser substance (26), and that to switch from the reflecting to the transmitting switch condition the volume of the chamber (35) is reduced by at least one, for example electromagnetically, thermoelectrically or piezoelectrically driven device, and the optically denser substance (26) is thereby pressed into the recesses.

18. Optical multiple switch according to any one of Claims 1 to 16, **characterized in that** the device provided for the optional filling of the recesses (2, 3; 7, 8; 11, 20; 25) involved in the optional reflection or transmission has at least one micropump connected with the recesses.

19. Optical multiple switch according to any one of Claims 1 to 16, **characterized in that** the device provided for the optional filling of the recesses (2, 3; 7, 8; 11, 20; 25) involved in the optional reflection or transmission has at least one switchable heating element and/or cooling element in contact with the optically thinner substance and/or optically denser substance.

20. Use of one or more optical multiple switches according to any one of Claims 1 to 19 to produce an optical bus system.

## Revendications

1. Un interrupteur optique multiple avec **N** premières entrées optiques E1(n), dans lequel les **N** premières entrées optiques E1(n) peuvent être optionnellement commutées aux **N** premières sorties optiques A1(n) ou aux **N** secondes sorties optiques A2(n)
qui possède un corps principal (1), transparent au moins dans la région des trajets du rayon,
et qui possède des retraits (2, 3; 7,8; 11; 20) pour la réflexion optionnelle ou la transmission de lumière,
dans lequel, si les retraits sont remplis avec au moins une substance (4) qui est optiquement plus mince en comparaison avec le matériau transparent du corps principal, les rayons lumineux incidents **N** sont totalement réfléchis des surfaces (5, 6: 9, 10; 12, 13; 21, 22) des retraits, et
dans lequel, si les retraits sont remplis avec au moins une substance (26) dont l'index de réfraction correspond approximativement à celui du matériau transparent du corps principal, les rayons lumineux incidents **N** passent au travers des retraits, et
qui possède au moins un dispositif, qui remplit optionnellement les retraits, dans la condition de réflexion de l'interrupteur avec la substance optiquement plus mince (4), ou dans la condition de transmission avec la substance optiquement plus dense (26),
**caractérisé en ce que**,
l'interrupteur optique multiple possède en plus **N** secondes entrées E2(n) optiques et,
**N** est supérieur plutôt que égal à 2 et
le corps principal (1) possède un maximum de 2 retraits (2, 3; 7, 8; 11, 20) pour la réflexion optionnelle ou la transmission de lumière,
dans lequel deux surfaces (5, 6; 9, 10; 12, 13; 21, 22) des retraits sont formées et disposées dans le trajet lumineux des rayons lumineux incidents 2x**N**,
que dans la condition de réflexion de l'interrupteur les **N** premières entrées optiques E1(n) sont optiquement connectées avec les **N** premières sorties optiques A1(n) et les **N** secondes entrées optiques E2(n) sont optiquement connectées avec les secondes sorties optiques A2(n), et
que dans la condition de transmission d'interrupteur les **N** premières entrées optiques E1(n) sont optiquement connectées avec les **N** secondes sorties optiques A2(n).

2. Un interrupteur optique multiple selon la Revendication 1, **caractérisé en ce que** les deux surfaces (5,6 ou 21,22) des retraits (2,3) ou le retrait (2) auquel dans la condition de réflexion de l'interrupteur les rayons lumineux incidents sont totalement réfléchis, sont disposées parallèles l'une à l'autre.

3. Un interrupteur optique multiple avec **N** premières entrées optiques E1(n), dans lequel les **N** premières entrées optiques E1(n) peuvent être optionnellement commutées aux **N** premières sorties optiques A1(n) ou aux **N** secondes sorties optiques A2(n),
qui possède un corps principal (1), qui est transparent au moins dans la région des rayons lumineux,
et qui possède des retraits (25) pour la réflexion optionnelle ou la transmission de lumière,
dans lequel, si les retraits (25) sont remplis avec au moins une substance (4) qui est optiquement plus mince en comparaison avec le matériau transparent du corps principal, les **N** rayons lumineux incidents sont totalement réfléchis par les surfaces (27, 28) des retraits (25), et
dans lequel, si les retraits (25) sont remplis avec au moins une substance (26), dont l'index de réfraction correspond approximativement à celui du matériau transparent du corps principal, les **N** rayons lumineux incidents passent au travers des retraits (25), et
qui possède au moins un dispositif, qui remplit les retraits (25) optionnellement dans la condition de réflexion de l'interrupteur avec la substance optiquement plus mince (4) ou dans la condition de transmission de l'interrupteur avec la substance optiquement plus dense (26),
**caractérisé en ce que**,
l'interrupteur optique multiple possède en plus des **N** secondes entrées optiques E2(n), et
**N** est supérieur plutôt que égal à 1, et
le corps principal (1) possède un maximum de 2 retraits (25) pour la réflexion optionnelle ou la transmission de lumière, et
deux surfaces (29, 30) du corps principal (1) et deux surfaces (27, 28) des retraits (25) sont formées et disposées dans le trajet du rayon des rayons lumineux incidents 2x**N**,
que dans la condition de réflexion de l'interrupteur les **N** premières entrées optiques E1(n) sont connectées optiquement avec les **N** premières sorties optiques A1(n) et les **N** secondes entrées optiques E2(n) sont connectées optiquement avec les secondes sorties optiques A2(n), et
que dans la condition de transmission de l'interrupteur les **N** premières et secondes entrées optiques E1(n) / E2(n) sont optiquement connectées avec les **N** premières/secondes sorties optiques A2(n)/A1(n).

4. Un interrupteur optique multiple selon le Revendication 3, **caractérisé en ce que**, des deux surfaces (29, 30) du corps principal (1) une surface (29) est placée opposée aux **N** premières sorties optiques A1(n), et une surface (30) est placée opposée aux **N** secondes entrées optiques E2(n).

5. Un interrupteur optique multiple selon le Revendication 4, **caractérisé en ce que**, les deux surfaces (29, 30) placées opposées aux entrées E2(n) et aux sorties A1(n) du corps principal (1) sont disposées à un angle de 70° à 110° de l'une et l'autre.

6. Un interrupteur optique multiple selon les Revendications 3 à 5, **caractérisé en ce que** les deux surfaces (29, 30) du corps principal (1) sont formées par au moins un retrait additionnel dans le corps principal.

7. Un interrupteur optique multiple selon toutes les revendications précédentes, **caractérisé en ce que N** est supérieur plutôt que égal à 2, et que les **N** premières entrées optiques E1(n) et les **N** secondes entrées optiques E2(n) sont disposées de façon que les **N** premiers rayons lumineux incidents LS1(n) et les **N** seconds rayons lumineux incidents LS2(n) sont tous deux placés dans un plan tel que les deux plans sont placés à un angle de 70° à 110° de l'un à l'autre.

8. Un interrupteur optique multiple selon toutes les revendications précédentes, **caractérisé en ce que** le corps principal (1) possèdent précisément deux retraits (2, 3 ou 7, 8) pour la réflexion optionnelle ou la transmission de lumière.

9. Un interrupteur optique multiple selon la Revendication 8, **caractérisé en ce que** le deux surfaces (9, 10) des retraits (7, 8) aux quels, dans la condition de réflexion les rayons lumineux incidents sont totalement réfléchis, sont disposées à un angle de 70° à 110° de l'une et l'autre.

10. Un interrupteur optique multiple selon les revendications 1 à 7, **caractérisé en ce que** le corps principal possède précisément un retrait (11, 20, 25) pour la réflexion optionnelle ou la transmission de lumière.

11. Un interrupteur optique multiple selon la Revendications 10, **caractérisé en ce que** les deux surfaces (12, 13; 27, 28) du retrait (11; 25) au quel dans la condition de réflexion de l'interrupteur les rayons lumineux incidents sont totalement réfléchis, sont disposées à un angle de 70° à 110° l'un de l'autre.

12. Un interrupteur optique multiple selon toutes les revendications précédentes, **caractérisé en ce que** au moins une des surfaces de réflexion est formée de façon que la lumière incidente est au moins partiellement groupée par réflexion sur cette surface.

13. Un interrupteur optique multiple selon toutes les revendications précédentes, **caractérisé en ce que** le corps principal possède au moins un retrait supplémentaire pour la réception et le maintien des conducteurs d'onde optique, spécialement de fibres individuelles en verre ou en plastique, leurs bandes ou fiches à fibre.

14. Un interrupteur optique multiple selon toutes les revendications précédentes, **caractérisé en ce que** le corps principal possède au moins un retrait supplémentaire pour la réception et le maintien d'éléments microscopiques, spécialement des micro lentilles ou des lentilles GRIN.

15. Un interrupteur optique multiple selon toutes les revendications précédentes, **caractérisé en ce que** le corps principal possède dans le trajet lumineux au moins un retrait supplémentaire formé de façon que les rayons lumineux incidents sur ce retrait sont transmis de là en faisceau.

16. Un interrupteur optique multiple selon toutes les revendications précédentes, **caractérisé en ce que** le corps principal possède des structures de conducteur d'onde optique intégrées.

17. Un interrupteur optique multiple selon toutes les revendications précédentes, **caractérisé en ce que** les retraits (2, 3; 7, 8; 11; 20; 25) sont connectés avec au moins une chambre (35) qui est variable en volume, la chambre (35) étant au moins partiellement remplie avec la substance optiquement plus dense (26), et cela pour commuter de la condition de réflexion de l'interrupteur à celle de transmission, le volume de la chambre (35) est réduit par au moins un dispositif commandé par exemple électromagnétiquement, thermoélectriquement ou piezoélectriquement, et la substance optiquement plus dense (26) est ainsi compressée dans les retraits.

18. Un interrupteur optique multiple selon toutes les Revendications de 1 à 16, **caractérisé en ce que** le dispositif fourni pour le remplissage optionnel des retraits (2, 3; 7, 8; 11, 20; 25) nécessaire à la réflexion optionnelle ou la transmission possède au moins une micropompe connectée avec les retraits.

19. Un interrupteur optique multiple selon toutes les Revendications de 1 à 16, **caractérisé en ce que** le dispositif fourni pour le remplissage optionnel des retraits (2, 3; 7, 8; 11, 20; 25) nécessaire à la réflexion optionnelle ou la transmission possède au moins un élément de chauffage commutable et/ou un élément de refroidissement en contact avec la substance optiquement plus mince et/ou la substance optiquement plus dense.

20. Une utilisation d'un ou plusieurs interrupteurs optiques multiples selon toutes les Revendications de 1 à 19 pour produire un système de bus optique.
